# EUROPEAN PATENT APPLICATION

(11) **EP 4 607 641 A1**
(43) Date of publication of application: **27.08.2025**
(21) Application number: 23879003.4
(22) Date of filing: 11.10.2023
(51) Int. Cl.: H01M 10/056, H01M 10/0525

(54) **LITHIUM ION ELECTROLYTIC SOLUTION, GEL POLYMER ELECTROLYTE, AND LITHIUM ION BATTERY**

(30) Priority: 20.10.2022 CN 202211285597
(71) Applicant: Zhangjiagang Guotai-Huarong New Chemical Materials Co., Ltd, Suzhou, Jiangsu 215600 (CN)
(72) Inventor: YUAN, Jie, Suzhou, Jiangsu 215600 (CN); LI, Yunfei, Suzhou, Jiangsu 215600 (CN); ZHANG, Yin, Suzhou, Jiangsu 215600 (CN); GAN, Chaolun, Suzhou, Jiangsu 215600 (CN)
(74) Representative: De Vries & Metman
(86) International application number: PCT/CN2023/123996
(87) International publication number: WO 2024/083012

(57) **Abstract**

In order to solve the problems of poor liquid retention capacity and poor cycle performance of a gel polymer electrolyte, provided is a lithium ion electrolytic solution, comprising a lithium salt, an organic solvent, a precursor, and an additive, wherein the additive comprises one or two of a zero-dimensional carbon nanomaterial and a quasi-zero-dimensional carbon nanomaterial, and a plasticizer. The gel polymer electrolyte is formed after the described lithium ion electrolytic solution is polymerized, has good liquid retention capacity, can keep good interfacial compatibility with an electrode, improves the interface resistance, and improves the normal-temperature cycle performance of the lithium ion battery. **In** addition, further provided is a corresponding lithium ion battery.

## Description

### Technical Field

The present disclosure relates to a lithium-ion electrolytic solution, a gel polymer electrolyte and a lithium-ion battery.

### Background

With the advantages of high working voltage, large energy density, long cycle life, environmental friendliness and low self-discharge, lithium-ion batteries (LIBs) can be used as portable energy storage devices in electric vehicles, hybrid vehicles, plug-in hybrid vehicles, industrial and smart grids and have broad application prospects.

As one of critical components of LIBs, electrolytes significantly impact the safety and electrochemical properties of LIBs. Traditional electrolyte materials are mainly organic liquid electrolytes, supplemented by other materials. However, the organic liquid electrolytes are highly prone to issues such as leakage and swelling, leading to safety problems. Solid electrolytes offer good safety, but exhibit poor contact with the electrodes, causing a high interface impedance. Additionally, most solid electrolytes have low room-temperature ionic conductivity, failing to meet the requirements of LIBs. Gel polymer electrolyte is an electrolyte formed by adding a corresponding plasticizer to an all-solid polymer electrolyte. This combination has both the cohesion of solid and the diffusion of liquid. The gel polymer electrolyte combines the excellent characteristics of a polymer matrix (such as mechanical stability, flexibility and low leakage risk) with the excellent ionic conductivity of liquid organic electrolytes, thereby having significant commercial prospects.

Although gel polymer electrolytes have many excellent properties, their mechanical strength is low and it is difficult to resist the damage of lithium dendrites during use of batteries. Chinese Patent CN201910732788.8 discloses using graphene quantum dots as an additive to modify an electrolytic solution. Without affecting the transmission of lithium ions, the graphene quantum dots guide the uniform nucleation and growth deposition of lithium as nucleation sites, thereby inhibiting the growth of dendrites in the charge-discharge cycles of lithium metal electrodes, and eliminating the potential for short circuits. However, the normal-temperature cycle performance of the electrolytic solution still needs to be improved.

### Summary of the Invention

The technical problem to be solved by the present disclosure is to provide a lithium-ion electrolytic solution. A gel polymer electrolyte prepared from the lithium-ion electrolytic solution has a good liquid retention capacity and good room-temperature cycle performance.

To achieve the above objective, the technical solution adopted by the present disclosure is as follows:

The present disclosure provides a lithium-ion electrolytic solution. The lithium-ion electrolytic solution comprises a lithium salt, an organic solvent, a precursor and an additive. The additive comprises a zero-dimensional carbon nanomaterial and/or a quasi-zero-dimensional carbon nanomaterial, and a plasticizer.

According to some embodiments, the precursor is selected from the group consisting of methacrylate, vinyl carbonate (VC), acrylonitrile (AN), vinyl acetate (VAC), styrene (ST), polyethylene oxide (PEO), polyphenylene oxide (PPO), polyoxymethylene (POM), polyvinyl acetate (PVA), polyethyleneimine (PEI), polyethylene succinic ester, polyoxetane, polyβ-propiolactone, polyepichlorohydrin, polyN-propyl aziridine, poly(alkylene polysulfides), polyvinylidene fluoride (PVDF), methyl acrylate (MA), acrylamide (AM), methyl 2-(hydroxymethyl)acrylate, trifluoroethylacrylate (TFMA), polyethylene glycol phenyl ether acrylate (PEGPEA), polyethylene glycol diacrylate (PEGDA), polyethylene glycol diglycidyl ether (PEGDE), ethoxylated trimethylolpropane triacrylate (ETPTA), polyvinyl alcohol-β-cyanoethyl ether (PVA-CN), 1,3-dioxolane (DOL), 1,3,5-Trioxane, 1,4-dioxane, tetrahydrofuran (THF), polyvinyl formal (PVFM), and a combination thereof.

According to some embodiments, the content of the precursor is 1% to 5%, such as 1%, 1.5%, 2%, 2.5%, 3%, 4%, 5%, and the like, of the total mass of the lithium-ion electrolytic solution.

According to some embodiments, the plasticizer is selected from the group consisting of fluorobenzene, ethyl acetate, and dimethyl phthalate.

According to some embodiments, the content of the plasticizer is 3% to 12%, such as 3%, 4%, 5%, 6%, 7%, 8%, 9%, 10%, 11%, 12%, and the like, of the total mass of the lithium-ion electrolytic solution.

According to some embodiments, when the lithium salt does not comprise LiPF₆ and/or LiBF₄, the lithium-ion electrolytic solution further comprises an initiator; when the lithium salt comprises LiPF₆ and/or LiBF₄, an initiator is added to the lithium-ion electrolytic solution optionally. That is, the lithium-ion electrolytic solution may or may not comprise an initiator. LiPF₆ may be partially decomposed to form PF₅ after being placed under certain conditions, and LiBF₄ may be partially decomposed to produce BF₃ after being placed under certain conditions. PF₅ and BF₃ may be used as initiators for forming polymers, respectively, so that the electrolytic solution is converted from a liquid state to a gel state.

Further, the initiator is selected from the group consisting of an azo initiator, a peroxy initiator, a redox initiator, a cationic polymerization initiator, an anionic polymerization initiator and a combination thereof.

Specifically, the azo initiator comprises azobisisobutyronitrile and/or dimethyl 2,2'-azobis(2-methylpropionate); the peroxy initiator comprises benzoyl peroxide; the cationic polymerization initiator comprises one or more of BF₃, PF₅, AlCl₃, Al(CF₃SO₃)₃, and Sn(CF₃SO₃)₂; the anionic polymerization initiator comprises one or more of an alkali metal, an organic compound of an alkali metal and an alkaline earth metal, a tertiary amine, and a nucleophilic reagent.

According to some embodiments, the additive further comprises one or more of benzenesulfonamide derivatives having a structural formula of 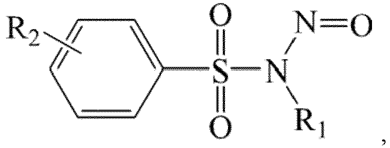 wherein R₁ is selected from the group consisting of F, alkyl and fluoroalkyl, and R₂ is selected from the group consisting of H, F, alkyl and fluoroalkyl.

Further, the benzenesulfonamide derivatives comprise N-methyl-N-nitrosotoluene-4-sulphonamide (CAS: 80-11-5).

Further, the content of the benzenesulfonamide derivative is 0.05% to 5%, such as 0.05%, 0.1%, 0.5%, 1%, 1.5%, 2%, 3%, 4%, 5%, and the like, of the total mass of the lithium-ion electrolytic solution.

According to some embodiments, the organic solvent is selected from the group consisting of ethylene carbonate, fluoroethylene carbonate, propylene carbonate, dimethyl carbonate, diethyl carbonate, dipropyl carbonate, ethyl methyl carbonate, propyl methyl carbonate, propyl ethyl carbonate, methyl acetate, ethyl acetate, propyl acetate, methyl propionate, ethyl propionate, 1,4-butyrolactone, ethylene glycol dimethyl ether, ethylene glycol diethyl ether, acetonitrile, adiponitrile, butanedinitrile, glutaronitrile, N,N-dimethylformamide, N,N-dimethylacetamide, dimethyl sulfoxide, dimethyl sulfone, sulfolane, trimethyl phosphate, and a combination thereof.

Further, the organic solvent comprises ethylene carbonate, fluoroethylene carbonate, and ethyl methyl carbonate. When the precursor is selected from polymers (such as PVA-CN), the polymer has poor solubility in the system of the organic solvent, and it takes a long time to dissolve (2 h or more) the polymer. Preferably, the organic solvent further comprises N,N-dimethylformamide. By first dissolving the polymer in N,N-dimethylformamide and then mixing the resulting solution of the polymer with the system of the organic solvent, the time for dissolving the polymer may be greatly shortened.

According to some embodiments, the content of the organic solvent is 70% to 85%, such as 70%, 72%, 74%, 76%, 78%, 80%, 82% and the like, of the total mass of the lithium-ion electrolytic solution.

According to some embodiments, the lithium salt comprises one or more of LiTFSI, LiPF₆, LiBF₄, LiBOB, LiBC₂O₄F₂, LiClO₄, LiCF₃SO₃, LiN(FSO₂)₂, and LiN(CF₃SO₂)₂.

According to some embodiments, the content of the lithium salt is 10% to 20%, such as 10%, 11%, 12%, 13%, 15%, 16%, 17%, 18%, 19%, 20% and the like, of the total mass of the lithium-ion electrolytic solution.

According to some embodiments, the zero-dimensional carbon nanomaterial comprises one or more of fullerene, nanodiamond, and carbon nano-onion.

According to some embodiments, the quasi-zero-dimensional carbon nanomaterial comprises graphene quantum dots and/or carbon dots.

According to some embodiments, the content of the zero-dimensional carbon nanomaterial and/or the quasi-zero-dimensional carbon nanomaterial is 0.05% to 0.5%, such as 0.05%, 0.1%, 0.15%, 0.2%, 0.3%, 0.4%, 0.5%, and the like, of the total mass of the lithium-ion electrolytic solution.

According to some embodiments, the precursor is polyvinyl alcohol-β-cyanoethyl ether, and the precursor uses a solution of polyvinyl alcohol-β-cyanoethyl ether dissolved in N,N-dimethylformamide as a starting material.

The present disclosure further provides a gel polymer electrolyte formed by reaction of the lithium-ion electrolytic solution described above.

According to some embodiments, the reaction includes placing the lithium-ion electrolytic solution at a temperature of 55°C to 65°C for 20 h to 28 h, so that the lithium-ion electrolytic solution is converted into the gel polymer electrolyte in a gel state from a liquid state.

The present disclosure further provides a lithium-ion battery. The lithium-ion battery comprises a cathode, an anode, a separator and the described lithium-ion electrolytic solution or the described gel polymer electrolyte.

According to some embodiments, the material of the cathode is a ternary material, including but not limited to NCM 811.

According to some embodiments, the material of the anode is silicon carbon, including but not limited to SiOx-C.

According to some embodiments, the lithium-ion battery is assembled in the form of an electrolytic solution. After battery formation, the electrolytic solution is converted from a liquid state to a gel state.

Due to use of the above technical solution, the present disclosure has the following advantages as compared with the prior art:

The lithium-ion electrolytic solution of the present disclosure has a good liquid retention capacity after polymerization and can maintain good interface compatibility with electrodes and reduce interface resistance, thereby improving the room-temperature cycle performance of lithium-ion batteries.

### Detailed Description of the Invention

Although gel polymer electrolytes have many excellent properties, their mechanical strength is low and it is difficult to resist the damage of lithium dendrites during battery use. The addition of graphene quantum dots to an electrolyte can inhibit the growth of dendrites during the charge-discharge cycles of lithium metal electrodes and eliminate the potential for short circuits. However, the cycle performance of the battery cannot be improved. By adjusting the formulation of a lithium-ion electrolytic solution, the applicants provide a lithium-ion electrolytic solution. The lithium-ion electrolytic solution has a good liquid retention capacity after polymerization and can maintain good interface compatibility with electrodes and reduce interface resistance, thereby improving the cycle performance of batteries. The following further describes the solution of the present disclosure.

The present disclosure provides a lithium-ion electrolytic solution, comprising a lithium salt, an organic solvent, a precursor and an additive. The additive comprises a zero-dimensional carbon nanomaterial and/or a quasi-zero-dimensional carbon nanomaterial, and a plasticizer.

According to some specific and preferred embodiments, a lithium-ion electrolytic solution comprises:
a lithium salt which is LiPF₆;
an organic solvent, which comprises ethylene carbonate, fluoroethylene carbonate, and ethyl methyl carbonate;
a precursor which is PVA-CN; and
an additive which comprises a zero-dimensional carbon nanomaterial and/or a quasi-zero-dimensional carbon nanomaterial, and a plasticizer.

Further, the additive further comprises one or more of benzenesulfonamide derivatives having a structural formula of 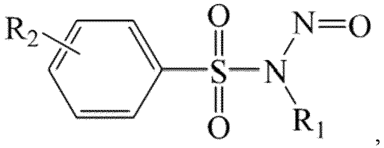 wherein R₁ is selected from the group consisting of F, alkyl and fluoroalkyl, and R₂ is selected from the group consisting of H, F, alkyl and fluoroalkyl.

The present disclosure is further described below in conjunction with embodiments. However, the present disclosure is not limited to the following embodiments. The implementation conditions used in the embodiments may be further adjusted according to the different requirements of specific use, and the implementation conditions not specified herein are conventional conditions in this industry. The technical features involved in various embodiments of the present invention may be combined with each other as long as they do not conflict with each other. The PVA-CN in the following examples was purchased from Wuxi Sanyou New Material Technology Co., Ltd., also known as polyvinyl alcohol-β-cyanoethyl ether.

A battery comprises a cathode, an anode, a separator, and a gel polymer electrolyte. The preparation of the cathode, the anode, the separator, and the gel polymer electrolyte are detailed below.

Preparation of a cathode made of a ternary material (NCM811): weighing cathode active material NCM811, conductive agent Super-P and binder PVDF (polyvinylidene fluoride) in a ratio of 8:1:1, adding into an appropriate solvent and mixing into a homogeneous slurry to make a cathode active material coating; cleaning a cathode current collector, and then uniformly coating the surface of the cathode current collector with the cathode active material coating , and immediately drying the cathode current collector in a vacuum oven at 60°C for 12 h for later use;
preparation of the separator: placing a PP (polypropylene)/PE (polyethylene)/PP three-layer separator in a vacuum oven for later use;
preparation of a silicon carbon (SiOx-C) anode: weighing an anode active material SiOx-C, conductive agent Super-P and binder LiPAA in a ratio of 92:2:6, adding into an appropriate solvent and mixing into a homogeneous slurry to make an anode active material coating; cleaning an anode current collector, and then uniformly coating the surface of the anode current collector with the anode active material coating, and immediately drying the anode current collector in a vacuum oven at 60°C for 12 h for later use;
placing an electrolytic solution from the following examples and comparative examples in a glass bottle in a sealed manner at 60°C for 24 h and then observing whether the electrolytic solution is completely polymerized from a liquid state to a gel state.

The electrolytic solution was formulated according to the following examples and comparative examples, and the electrolytic solution from the following examples and comparative examples was injected into a full cell assembled with the above-described materials (referring to the assembly method of batteries in the prior art, and the assembly method is not defined specifically herein), followed by testing.

Step 1 (battery formation): the batteries were constant current charged at 0.1C, 25°C to 4.2V, placed for 15 min, and constant current discharged to 2.75V, followed by secondary sealing.

Step 2 (the state conversion process of the electrolyte): the batteries were placed at 60°C for 24 h.

Step 3 (room-temperature cycle test of the battery): the batteries were constant current charged at 0.2C, 25°C to 4.2V, placed for 15 min, constant current discharged at 0.2C to 2.75V, and cycled for 5Z; the batteries were constant current charged at 0.5C, 25°C to 4.2V, placed for 15 min, constant current discharged at 1.0C to 2.75V, and cycled for 300Z.

### Example 1

18.64 g of ethylene carbonate (EC), 4.49 g of fluoroethylene carbonate (FEC), 51.7 g of ethyl methyl carbonate (EMC) and 10 g of ethyl acetate were mixed to obtain a mixed solution, and 15.17 g of an electrolyte salt (LiPF₆) was then added to the mixed solution, followed by thorough stirring. 2 g of polyvinyl alcohol-β-cyanoethyl ether (PVA-CN) and 0.15 g of graphene quantum dots were added to the resulting solution.

### Example 2

18.64 g of ethylene carbonate (EC), 4.49 g of fluoroethylene carbonate (FEC), 56.7 g of ethyl methyl carbonate (EMC) and 5 g of fluorobenzene were mixed to obtain a mixed solution, and 15.17 g of an electrolyte salt (LiPF₆) was then added to the mixed solution, followed by thorough stirring. 2 g of PVA-CN and 0.15 g of graphene quantum dots were added to the resulting solution.

### Example 3

18.64 g of ethylene carbonate (EC), 4.49 g of fluoroethylene carbonate (FEC), 56.7 g of ethyl methyl carbonate (EMC) and 5 g of dimethyl phthalate were mixed to obtain a mixed solution, and 15.17 g of an electrolyte salt (LiPF₆) was then added to the mixed solution, followed by thorough stirring. 2 g of PVA-CN and 0.15 g of graphene quantum dots were added to the resulting solution.

### Example 4

18.64 g of ethylene carbonate (EC), 4.49 g of fluoroethylene carbonate (FEC), 56.7 g of ethyl methyl carbonate (EMC) and 5 g of dimethyl phthalate were mixed to obtain a mixed solution, and 15.17 g of an electrolyte salt (LiPF₆) was then added to the mixed solution, followed by thorough stirring. 2 g of PVA-CN and 0.15 g of carbon dots were added to the resulting solution.

### Example 5

18.64 g of ethylene carbonate (EC), 4.49 g of fluoroethylene carbonate (FEC), 51.7 g of ethyl methyl carbonate (EMC) and 10 g of ethyl acetate were mixed to obtain a mixed solution, and 15.17 g of an electrolyte salt (LiPF₆) was then added to the mixed solution, followed by thorough stirring. 2 g of PVA-CN, 0.15 g of graphene quantum dots and 1 g of N-methyl-N-nitrosotoluene-4-sulphonamide were added to the resulting solution.

### Example 6

18.64 g of ethylene carbonate (EC), 4.49 g of fluoroethylene carbonate (FEC), 51.7 g of ethyl methyl carbonate (EMC) and 10 g of ethyl acetate were mixed to obtain a mixed solution, and 15.17 g of an electrolyte salt (LiPF₆) was then added to the mixed solution, followed by thorough stirring. 2 g of PVA-CN, 0.15 g of graphene quantum dots and 2 g of N-methyl-N-nitrosotoluene-4-sulphonamide were added to the resulting solution.

### Comparative Example 1

18.64 g of ethylene carbonate (EC), 4.49 g of fluoroethylene carbonate (FEC) and 61.7 g of ethyl methyl carbonate (EMC) were mixed to obtain a mixed solution, and 15.17 g of an electrolyte salt (LiPF₆) was then added to the mixed solution, followed by thorough stirring.

### Comparative Example 2

18.64 g of ethylene carbonate (EC), 4.49 g of fluoroethylene carbonate (FEC) and 61.7 g of ethyl methyl carbonate (EMC) were mixed to obtain a mixed solution, and 15.17 g of an electrolyte salt (LiPF₆) was then added to the mixed solution, followed by thorough stirring. 2 g of PVA-CN and 0.15 g of graphene quantum dots were added to the resulting solution.

### Comparative Example 3

18.64 g of ethylene carbonate (EC), 4.49 g of fluoroethylene carbonate (FEC) and 61.7 g of ethyl methyl carbonate (EMC) were mixed to obtain a mixed solution, and 15.17 g of an electrolyte salt (LiPF₆) was then added to the mixed solution, followed by thorough stirring. 3.0 g of PVA-CN and 0.15 g of graphene quantum dots were added to the resulting solution.

### Comparative Example 4

18.64 g of ethylene carbonate (EC), 4.49 g of fluoroethylene carbonate (FEC) and 61.7 g of ethyl methyl carbonate (EMC) were mixed to obtain a mixed solution, and 15.17 g of an electrolyte salt (LiPF₆) was then added to the mixed solution, followed by thorough stirring. 2.0 g of PVA-CN and 0.05 g of graphene quantum dots were added to the resulting solution.

### Comparative Example 5

18.64 g of ethylene carbonate (EC), 4.49 g of fluoroethylene carbonate (FEC) and 61.7 g of ethyl methyl carbonate (EMC) were mixed to obtain a mixed solution, and 15.17 g of an electrolyte salt (LiPF₆) was then added to the mixed solution, followed by thorough stirring. 2.0 g of PVA-CN and 0.1 g of graphene quantum dots were added to the resulting solution.

### Comparative Example 6

18.64 g of ethylene carbonate (EC), 4.49 g of fluoroethylene carbonate (FEC), 51.7 g of ethyl methyl carbonate (EMC) and 10 g of ethyl acetate were mixed to obtain a mixed solution, and 15.17 g of an electrolyte salt (LiPF₆) was then added to the mixed solution, followed by thorough stirring. 2.0g of PVA-CN was added to the resulting solution.

### Comparative Example 7

18.64 g of ethyl methyl carbonate (EMC), 4.49 g of fluoroethylene carbonate (FEC), 51.7g of ethyl methyl carbonate (EMC) and 10 g of ethyl acetate were mixed to obtain a mixed solution, and 15.17 g of an electrolyte salt (LiODFB) was then added to the mixed solution, followed by thorough stirring. 2 g of PVA-CN and 0.15 g of graphene quantum dots were added to the resulting solution.

The performance of the electrolytic solutions and batteries from above Examples and Comparative Examples are shown in Table 1 below.

**Table 1**

| | Morphology of electrolyte solution placed at 60°C for 24 h | Capacity retention rate after cycling for 300Z at 25°C /% |
|---|---|---|
| Example 1 | Polymerized, with no electrolytic solution oozing out; | 89 |
| Example 2 | Polymerized, with no electrolytic | 84 |
| | solution oozing out; | |
| Example 3 | Polymerized, with no electrolytic solution oozing out; | 79 |
| Example 4 | Polymerized, with no electrolytic solution oozing out; | 91 |
| Example 5 | Polymerized, with no electrolytic solution oozing out; | 92 |
| Example 6 | Polymerized, with no electrolytic solution oozing out; | 95 |
| Comparative Example 1 | Liquid state | 54 |
| Comparative Example 2 | Polymerized, with the electrolytic solution oozing out; | 48 |
| Comparative Example 3 | Polymerized, with the electrolytic solution oozing out; | 44 |
| Comparative Example 4 | Polymerized, with the electrolytic solution oozing out; | 42 |
| Comparative Example 5 | Polymerized, with the electrolytic solution oozing out; | 48 |
| Comparative Example 6 | Polymerized, with the electrolytic solution oozing out; | 47 |
| Comparative Example 7 | Not polymerized | / |

Referring to the testing results in Table 1, the electrolytic solution with only PVA-CN and graphene quantum dots added but without the plasticizer (Comparative Example 2) was placed at a high temperature of 60°C for 24 h, and the electrolytic solution still leaked out. Compared with Example 1, Comparative Example 7 adopted LiODFB to replace LiPF₆. As a result, the electrolytic solution could not be polymerized into a gel state. In Comparative Example 6, the electrolytic solution with only the plasticizer ethyl acetate and PVA-CN added but without zero-dimensional carbon nanomaterials or quasi-zero-dimensional carbon nanomaterials was polymerized in part, and the electrolytic solution still oozed out. In Examples 1 to 3, after the electrolytic solutions with PVA-CN, graphene quantum dots and different types of plasticizers added were placed at a high temperature of 60°C for 24 h, the electrolytic solutions were completely polymerized into a gel state, and no electrolytic solution oozed out. Carbon dots were used to replace graphene quantum dots in Example 4. N-methyl-N-nitrosotoluene-4-sulphonamide was also added in Examples 5 and 6. In Examples 4 to 6, after the electrolytic solutions were placed at a high temperature of 60°C for 24 h, the electrolytes were completely polymerized into a gel state, and no electrolytic solution oozed out. In view of the above, only the electrolytic solutions using lithium hexafluorophosphate as the lithium salt and containing the precursor PVA-CN, the plasticizer, and the zero-dimensional carbon nanomaterial and/or the quasi-zero-dimensional carbon nanomaterial can be completely polymerized from a liquid state to a gel state at a high temperature, and no electrolytic solution oozes out.

Referring to the experimental results in Table 1 again, the capacity retention rate of the NCM811/SiOx-C full cells in Comparative Example 2 was 48% after 300 cycles at room temperature; and the capacity retention rate of the NCM811/SiOx-C full cells in Comparative Example 6 was 47% after 300 cycles at room temperature. The capacity retention rates of the batteries in Examples 1 to 3 were 89%, 84% and 79% after 300 cycles at room temperature, respectively, indicating that the cycle performance of the batteries was greatly improved as compared with the comparative examples. In view of the above, the capacity retention rate of the electrolytic solutions using lithium hexafluorophosphate as the lithium salt and containing the precursor PVA-CN, the plasticizer, and the zero-dimensional carbon nanomaterial and/or the quasi-zero-dimensional carbon nanomaterial is improved obviously after 300 cycles at room temperature. Compared with Example 3, Example 4 adopted carbon dots to replace the graphene quantum dots, and the capacity retention rate of the batteries after 300 cycles at room temperature increased from 79% to 91%. Compared with Example 1, Example 5 and Example 6 also added 1 g of N-methyl-N-nitrosotoluene-4-sulphonamide and 2 g of N-methyl-N-nitrosotoluene-4-sulphonamide to the electrolytic solutions, respectively, and the capacity retention rate of the batteries was increased from 89% to 92% and 95% respectively after 300 cycles at room temperature. That is, N-methyl-N-nitrosotoluene-4-sulphonamide can further improve the normal-temperature cycle performance of the NCM811/SiOx-C full cells.

### Example 7

It was found that the PVA-CN was poorly soluble in conventional electrolytic solutions and it took more than 2 hours of stirring to dissolve the PVA-CN. The inventors also tried to dissolve the PVA-CN in N,N-dimethylformamide. For example, 2 g of PVA-CN was completely dissolved in 10 g of N,N-dimethylformamide within about 30 min, thereby greatly shortening the dissolution time of PVA-CN. Then, the solution of PVA-CN dissolved in N,N-dimethylformamide was added as a starting material to the electrolytic solution. The experimental results show that the electrolytic solution obtained by using the solution of PVA-CN dissolved in N,N-dimethylformamide as a starting material and the electrolytic solution obtained by directly using PVA-CN as a starting material had the same effect.

The above detailed description of the invention is intended to enable persons familiar with the art to understand the contents of the invention and implement them, instead of limiting the scope of the invention. Any equivalent changes or modifications made according to the spirit of the invention shall fall within the scope of the invention.

## Claims

1. A lithium-ion electrolytic solution, **characterized in that**, the lithium-ion electrolytic solution comprises a lithium salt, an organic solvent, a precursor and an additive; the additive comprises a zero-dimensional carbon nanomaterial and/or a quasi-zero-dimensional carbon nanomaterial, and a plasticizer.

2. The lithium-ion electrolytic solution according to claim 1, **characterized in that**, the precursor is selected from the group consisting of methacrylate, vinyl carbonate, acrylonitrile, vinyl acetate, styrene, polyethylene oxide, polyphenylene oxide, polyoxymethylene, polyvinyl acetate, polyethyleneimine, polyethylene succinic ester, polyoxetane, polyβ-propiolactone, polyepichlorohydrin, polyN-propyl aziridine, poly(alkylene polysulfides), polyvinylidene fluoride, methyl acrylate, acrylamide, methyl 2-(hydroxymethyl)acrylate, trifluoroethylacrylate, polyethylene glycol phenyl ether acrylate, polyethylene glycol diacrylate, polyethylene glycol diglycidyl ether, ethoxylated trimethylolpropane triacrylate, polyvinyl alcohol-β-cyanoethyl ether, 1,3-dioxolane, 1,3,5-Trioxane, 1,4-dioxane, tetrahydrofuran, polyvinyl formal, and a combination thereof; and/or, the content of the precursor is 1% to 5% of the total mass of the lithium-ion electrolytic solution.

3. The lithium-ion electrolytic solution according to claim 1, **characterized in that**, the plasticizer is selected from the group consisting of fluorobenzene, ethyl acetate, and dimethyl phthalate; and/or
the content of the plasticizer is 3% to 12% of the total mas of the lithium-ion electrolytic solution.

4. The lithium-ion electrolytic solution according to claim 1, **characterized in that**, when the lithium salt does not comprise LiPF₆ and/or LiBF₄, the lithium-ion electrolytic solution further comprises an initiator; when the lithium salt comprises LiPF₆ and/or LiBF₄, an initiator is added to the lithium-ion electrolytic solution optionally; the initiator is selected from the group consisting of an azo initiator, a peroxy initiator, a redox initiator, a cationic polymerization initiator, an anionic polymerization initiator and a combination thereof.

5. The lithium-ion electrolytic solution according to claim 4, **characterized in that**, the azo initiator comprises azobisisobutyronitrile and/or dimethyl 2,2'-azobis(2-methylpropionate);
the peroxy initiator comprises benzoyl peroxide;
the cationic polymerization initiator comprises one or more of BF₃, PF₅, AlCl₃, Al(CF₃SO₃)₃, and Sn(CF₃SO₃)₂; the anionic polymerization initiator comprises one or more of an alkali metal, an organic compound of an alkali metal and an alkaline earth metal, a tertiary amine, and a nucleophilic reagent.

6. The lithium-ion electrolytic solution according to claim 1, **characterized in that**, the additive further comprises one or more of benzenesulfonamide derivatives having a structural formula of 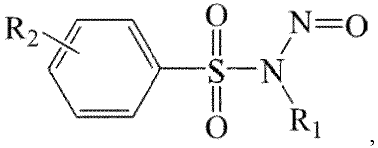 wherein R₁ is selected from the group consisting of F, alkyl and fluoroalkyl, and R₂ is selected from the group consisting of H, F, alkyl, and fluoroalkyl.

7. The lithium-ion electrolytic solution according to claim 6, **characterized in that**, the benzenesulfonamide derivatives comprise N-methyl-N-nitrosotoluene-4-sulphonamide; and/or,
the content of the benzenesulfonamide derivative is 0.05% to 5% of the total mass of the lithium-ion electrolytic solution.

8. The lithium-ion electrolytic solution according to claim 1, **characterized in that**, the organic solvent is selected from the group consisting of ethylene carbonate, fluoroethylene carbonate, propylene carbonate, dimethyl carbonate, diethyl carbonate, dipropyl carbonate, ethyl methyl carbonate, propyl methyl carbonate, propyl ethyl carbonate, methyl acetate, ethyl acetate, propyl acetate, methyl propionate, ethyl propionate, 1,4-butyrolactone, ethylene glycol dimethyl ether, ethylene glycol diethyl ether, acetonitrile, adiponitrile, butanedinitrile, glutaronitrile, N,N-dimethylformamide, N,N-dimethylacetamide, dimethyl sulfoxide, dimethyl sulfone, sulfolane, trimethyl phosphate, and a combination thereof; and/or, the content of the organic solvent is 70% to 85% of the total mass of the lithium-ion electrolytic solution.

9. The lithium-ion electrolytic solution according to claim 1, **characterized in that**, the lithium salt comprises one or more of LiTFSI, LiPF₆, LiBF₄, LiBOB, LiBC₂O₄F₂, LiClO₄, LiCF₃SO₃, LiN(FSO₂)₂, and LiN(CF₃SO₂)₂; and/or, the content of the lithium salt is 10% to 20% of the total mass of the lithium-ion electrolytic solution.

10. The lithium-ion electrolytic solution according to claim 1, **characterized in that**, the zero-dimensional carbon nanomaterial comprises one or more of fullerene, nanodiamond, and carbon nano-onion; the quasi-zero-dimensional carbon nanomaterial comprises graphene quantum dots and/or carbon dots; and/or,
the content of the zero-dimensional carbon nanomaterial and/or the quasi-zero-dimensional carbon nanomaterial is 0.05% to 0.5% of the total mass of the lithium-ion electrolytic solution.

11. The lithium-ion electrolytic solution according to claim 1, **characterized in that**, the precursor is polyvinyl alcohol-β-cyanoethyl ether, and the precursor uses a solution of polyvinyl alcohol-β-cyanoethyl ether dissolved in N,N-dimethylformamide as the starting material.

12. A gel polymer electrolyte, **characterized in that**, the gel polymer electrolyte is formed by reaction of the lithium-ion electrolytic solution according to any one of claims 1 to 11.

13. The gel polymer electrolyte according to claim 12, **characterized in that**, the reaction comprises placing the lithium-ion electrolytic solution at a temperature of 55°C to 65°C for 20 h to 28 h, so that the lithium-ion electrolytic solution is converted into the gel polymer electrolyte in a gel state from a liquid state.

14. A lithium-ion battery, **characterized in that**, the lithium-ion battery comprises a cathode, an anode, a separator and the lithium-ion electrolytic solution according to any one of claims 1 to 11 or the gel polymer electrolyte according to claim 12 or 13.

15. The lithium-ion battery according to claim 14, **characterized in that**, a material of the cathode is a ternary material and a material of the anode is silicon carbon.
